(19) Europäisches Patentamt
European Patent Office
Office européen des brevets

(11) EP 3 472 244 B1

(12) # EUROPÄISCHE PATENTSCHRIFT

(45) Veröffentlichungstag und Bekanntmachung des Hinweises auf die Patenterteilung:
**11.08.2021 Patentblatt 2021/32**

(21) Anmeldenummer: **17732340.9**

(22) Anmeldetag: **08.06.2017**

(51) Int Cl.:
***C08L 77/00*** *(2006.01)* ***C08L 77/02*** *(2006.01)*
***C08L 77/06*** *(2006.01)*

(86) Internationale Anmeldenummer:
**PCT/EP2017/063912**

(87) Internationale Veröffentlichungsnummer:
**WO 2017/216023 (21.12.2017 Gazette 2017/51)**

(54) **SCHLAGZÄHMODIFIER BASIEREND AUF POLYISOBUTEN FÜR POLYAMIDE**
IMPACT STRENGTH MODIFIER BASED ON POLYISOBUTENE FOR POLYAMIDES
AGENT DE MODIFICATION AU CHOC BASE SUR LES POLYISOBUTYLENES POUR POLYAMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2016 EP 16174502**

(43) Veröffentlichungstag der Anmeldung:
**24.04.2019 Patentblatt 2019/17**

(73) Patentinhaber: **BASF SE**
**67056 Ludwigshafen am Rhein (DE)**

(72) Erfinder:
- **LOHWASSER, Ruth**
  **67056 Ludwigshafen (DE)**
- **HERLE, Natalie Beatrice Janine**
  **57056 Ludwigshafen (DE)**
- **CORBERAN ROC, Rosa**
  **67056 Ludwigshafen (DE)**
- **HUST, Axel**
  **67056 Ludwigshafen (DE)**

(56) Entgegenhaltungen:
**EP-A2- 0 031 236**
**WO-A1-94/12575**
**US-A1- 2016 032 091**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 472 244 B1

## Beschreibung

Die Erfindung betrifft thermoplastischen Formmassen, enthaltend

A) 20 bis 99,9 Gew.-% eines thermoplastischen Polyamides,
B) 0,1 bis 40 Gew.-% eines Alkenylbernsteinsäurederivates, erhältlich durch Umsetzung von Polyisobuten (B1) mit einem zahlenmittleren Molekulargewicht $M_n$ von 10.000 bis 50.000 bei Temperaturen von 180 bis 250 °C mit Maleinsäure oder deren Derivate (B2), in einem stöchiometrischen Verhältnis von mindestens 2 Äquivalenten Maleinsäure oder deren Derivate (B2), pro reaktiver Doppelbindung im Polyisobuten (B1) für eine Dauer von mindestens 15 Minuten bis 10 Stunden und bis zu 10 bar Überdruck, wobei die Derivate ausgewählt sind aus der Gruppe bestehend aus Anhydriden, Mono- oder Dialkylestern und gemischten Estern, und wobei es sich bei den reaktiven Doppelbindungen um die Summe der terminalen $\alpha$- und $\beta$-Doppelbindungen im Polyisobuten (B1) handelt,
C) 0 bis 60 Gew.-% weiterer Zusatzstoffe,

wobei die Summe der Gewichtsprozente der Komponenten A) bis C) 100 % ergibt.

Weiterhin betrifft die Erfindung die Verwendung der erfindungsgemäßen Formmassen zur Herstellung von Formkörpern jeglicher Art und die hierbei erhältlichen Formkörper.

Die teilkristallinen Polyamide besitzen aufgrund ihrer Struktur und der Möglichkeit zur Bildung von intermolekularen Wasserstoffbrückenbindungen gute mechanische Eigenschaften, insbesondere Schlagzähigkeit und eine gute Wärmebeständigkeit. Aufgrund ihrer hygroskopischen polaren Natur nehmen Polyamide Wasser auf, was sich negativ auf die Mechanik auswirkt, insbesondere die Zugfestigkeit und Steifigkeit.

Im Kontrast zu Polyamid ist das amorphe Polyisobutylen (PIB) sehr hydrophob und aufgrund des niedrigen Glaspunktes weist es auch bei tiefen Temperaturen eine hohe Flexibilität auf. Wegen des amorphen klebrigen Charakters ist es für Anwendungen, die mechanische Festigkeit benötigen, nicht geeignet.

Um die komplementären Eigenschaften von verschiedenen Polymere zu verbinden ohne die guten mechanischen Eigenschaften des einen Blend Partners zu verlieren, werden Polymer Blends mit passenden Reagenzien kompatibilisiert.

Für Olefine wie z.B. Polyethylen PE oder Polypropylen PP werden häufig mit Maleinsäureanhydrid gegraftete PEs oder PPs zur Kompatibilisierung eingesetzt. Diese Kompatibilisatoren entstehen durch Radikalbildung entlang der Kette und anschließender Funktionalisierung, so dass mehrere Maleinsäureanhydrid-Gruppen entlang der Kette sitzen. Im Vergleich zu diesen Polyolefinen ist Polyisobutylen sehr oxidationsstabil und Funktionalisierung durch grafting entlang der Kette ist nur schwer möglich. Daher gab es bisher nur wenige Blend-Systeme mit Polyisobutylen Homopolymeren. In einer Veröffentlichung der Universität Eindhoven (M. C. M. van der Sanden, J. G. M. van Gisbergen, I. D. Tauber, H. E. H. Meijer, P. J. Lemstra, Integration of Fundamental Polymer Science and Technology 5 pp 66-71), wird der Versuch beschrieben ein hochmolekulares PIB mit Maleinsäureanhydrid (MSA) über einen Masterbatch aus Polypropylen mit MSA und einen Masterbatch eines Radikalbildners zu funktionalisieren. Da PIB kaum radikalisch zu funktionalisieren ist, ist die Kompatibilisierung gering und führt zu einem minderen mechanischen Profil.

In der WO 02/062895 A1 ist eine Methode beschrieben bei der PIB Homo- oder Copolymere zunächst mit Isocyanaten und dann mit Lactam oder Amid funktionalisiert werden um als Kompatibilisator zum Polyamid zu fungieren. Polyamid, Polyisobutylene und der Kompatibilisator wurden dann in einem weiteren Schritt in einem Brabender Kneter gemischt. Die Kompatibilisierung erfolgt teilweise in Gegenwart einer Zinnverbindung.

Einerseits ist die Methode sehr aufwendig und andererseits beeinflussen die verbliebenden Metallkomplexe die Eigenschaften von Polyamiden nachteilig (Farbe, Zersetzung).

Aus der DE-A-2702604 ist bekannt, Polyisobutene mit einem Polymerisationsgrad bis zu 100 mit Maleinsäureanhydrid zu Bernsteinsäurederivaten in stöchiometrischen oder leicht überschüssigen Mengen von Maleinsäureanhydrid umzusetzen. Dies entspricht einem Molekulargewicht des Polyisobuten von ca. 5600 g/mol.

In WO 12/072643 wird erwähnt, Polyisobutene mit einem zahlenmittleren Molekulargewicht $M_n$ bis zu 5000 g/mol mit Maleinsäureanhydrid zu Bernsteinsäurederivaten umzusetzen.

WO 94/12575 betrifft Zusammensetzungen, die 60 bis 95 Gew.-% Polyamid und 5 bis 40 Gew.-% eines funktionalisierten elastomeren Polymers enthalten. Zusätzlich enthalten sie mindestens eine niedermolekulare Komponente mit einer einzelnen funktionellen Gruppe. Diese Komponente hat ein Molekulargewicht von weniger als 1200. Als mögliche Komponente wird PIBSA erwähnt. In den Beispielen wird jedoch ausschließlich Phthalsäureanhydrid als diese modifizierende Komponente eingesetzt. Es wird ausgeführt, dass durch den Zusatz der niedermolekularen Komponente die Schlagzähigkeit der Blends verbessert werden kann.

US 2016/032091 betrifft elastomere Zusammensetzungen und ihre Verwendung. Die Mischung enthält ein Elastomer, Polyamide unterschiedlicher Viskositäten und einen Viskositätsmodifikator, bei dem es sich um ein Anhydrid-funktionalisiertes Oligomer handelt. Das Oligomer weist ein Molekulargewicht im Bereich von 500 bis 2.500 auf. Gemäß Tabelle 4 handelt es sich um PIBSA mit einem Molekulargewicht von 950. Diese Komponente wird zur Einstellung der

Viskosität des Polyamids eingesetzt. So soll eine geeignete Morphologie der an Elastomer reichen Zusammensetzung erhalten werden. Das PIBSA soll damit die Kompatibilität zwischen Elastomer und Polyamid sicherstellen.

EP 0 031 236 beschreibt PIBSA mit einem Molekulargewicht im Bereich von 15.000 bis 51.000 (Beispiele 1 bis 4) als Schmiermitteladditiv für Treibstoffe. Es werden insbesondere die dispergierenden Eigenschaften und die verbesserten Viskositäts-/Temperatureigenschaften beim Einsatz in Kohlenwasserstoffen beschrieben. Es werden insbesondere Schmierstoffe im Automobilbereich und industriellen Bereich, wie in Getrieben, mit dem Additiv versehen.

Aufgabe der vorliegenden Erfindung war es daher, die mechanischen Eigenschaften von Polyamiden bei tiefer und bei Raumtemperatur zu verbessern. Überraschenderweise wird insbesondere die Schlagzähigkeit durch Zugabe der erfindungsgemäßen Komponente B) signifikant erhöht, die Hydrophobierung der Polyamide (insbesondere an der Oberfläche von Formteilen) wird verbessert. Die Fließfähigkeit bei der Verarbeitung und die Wärmealterungsbeständigkeit (WAB) werden ebenso verbessert. Zusätzlich sind die optischen Eigenschaften (Clarity, Haze) besser trotz Zugabe eines Schlagzähmodifiers.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 20 bis 99,9, vorzugsweise 30 bis 99,5 und insbesondere 30 bis 80 Gew.-% mindestens eines thermoplastischen Polyamides, wobei teilkristalline Polyamide bevorzugt sind.

Die Polyamide der erfindungsgemäßen Formmassen weisen im allgemeinen eine Viskositätszahl von 79,9 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid® X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylen-sebacinsäureamid und Polycaprolactam sowie Copolyamide 6/66, insbesondere mit einem Anteil von 5 bis 95 Gew.-% an Caprolactam-Einheiten (z.B. Ultramid®C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

AB-Polymere:

| | |
|---|---|
| PA 4 | Pyrrolidon |

| | |
|---|---|
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

AA/BB-Polymere

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA 9T | 1,9-nonanediamin, Terephthalsäure |
| PA MXD6 | m-Xylylendiamin, Adipinsäure |
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Als Komponente B) enthalten die erfindungsgemäßen Formmassen 0,1 bis 40, bevorzugt 0,5 bis 25 und insbesondere 2 bis 22 Gew.-% eines Alkenylbernsteinsäurederivates, erhältlich durch Umsetzung von Polyisobuten (B1) mit einem zahlenmittleren Molekulargewicht $M_n$ von 10.000 bis 50.000 bei Temperaturen von 180 bis 250°C mit Maleinsäure oder deren Derivate (B2), in einem stöchiometrischen Verhältnis von mindestens 2 Äquivalenten Maleinsäure oder deren Derviate (B2), pro reaktiver Doppelbindung im Polyisobuten (B1) bevorzugt mehr als 2 Äquivalenten, besonders bevorzugt mindestens 2,5 Äquivalenten, ganz besonders bevorzugt mindestens 3 Äquivalenten, insbesondere mindestens 3,5 Äquivalenten und speziell mindestens 4 Äquivalenten Maleinsäure, oder deren Derivate, pro reaktiver Doppelbindung im Polyisobuten (B1) für eine Dauer von mindestens 15 Minuten bis 10 Stunden und bis zu 10 bar Überdruck umsetzt, wobei die Derivate ausgewählt sind aus der Gruppe bestehend aus Anhydriden, Mono- oder Dialkylestern und gemischten Estern, und wobei es sich bei den reaktiven Doppelbindungen um die Summe der terminalen $\alpha$- und $\beta$-Doppelbindungen im Polyisobuten (B1) handelt.

Durch das erfindungsgemäße Verfahren sind erstmals Bernsteinsäurederivate des Polyisobuten mit einem zahlenmittleren Molekulargewicht $M_n$ von 10.000 bis 50.000 zugänglich.

Unter "Bernsteinsäurederivaten des Polyisobuten" werden dabei sowohl die Umsetzungsprodukte von Polyisobuten mit Maleinsäure und deren Derivaten im engeren Sinn verstanden, als auch im weiteren Sinne solche Produkte, die aus diesen erhalten werden oder aus der Umsetzung von Polyisobuten mit $\alpha,\beta$-ungesättigten Monocarbonsäuren oder deren Derivaten oder anderen $\alpha,\beta$-ungesättigten Dicarbonsäuren oder deren Derivaten als Maleinsäure erhältlich sind, da die Monocarbonsäuren oftmals z.B. durch Decarboxylierung aus den Dicarbonsäuren erhalten werden können.

Bei dem in das erfindungsgemäße Verfahren einsetzbare Polymer (B1) handelt es sich um iso-Buten-Homopolymere oder iso-Buten enthaltende Copolymere, hier unter dem Begriff "Polyisobuten" zusammengefaßt, die wie folgt aus den jeweiligen Monomergemischen erhältlich sind:

Für den Einsatz von Isobuten oder eines Isobuten enthaltenden Monomerengemisches als zu polymerisierendem Monomer eignet sich als Isobuten-Quelle sowohl Rein-Isobuten als auch Isobuten-haltige $C_4$-Kohlenwasserstoffströme,

beispielsweise $C_4$-Raffina-te, insbesondere "Raffinat 1", $C_4$-Schnitte aus der Isobutan-Dehydrierung, $C_4$-Schnitte aus Steamcrackern und aus FCC-Crackern (fluid catalysed cracking), sofern sie weitgehend von darin enthaltenem 1,3-Butadien befreit sind. Ein $C_4$-Kohlenwasserstoff-strom aus einer FCC-Raffinerieeinheit ist auch als "b/b"-Strom bekannt. Weitere geeignete Isobuten-haltige $C_4$-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete $C_4$-Kohlenwasserstoffströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den genannten $C_4$-Kohlenwasserstoffströmen im Bereich von 40 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten sowie 2 bis 35 Gew.-% Butanen; beim anschließenden Polymerisationsverfahren verhalten sich die unverzeigten Butene im Raffinat 1 in der Regel praktisch inert und nur das Isobuten wird polymerisiert.

In einer bevorzugten Ausführungsform setzt man als Monomerquelle für die Polymerisation einen technischen $C_4$-Kohlenwasserstoffstrom mit einem Isobuten-Gehalt von 1 bis 100 Gew.-%, insbesondere von 1 bis 99 Gew.-%, vor allem von 1 bis 90 Gew.-%, besonders bevorzugt von 30 bis 60 Gew.-%, insbesondere einen Raffinat 1-Strom, einen b/b-Strom aus einer FCC-Raffinerieeinheit, einen Produktstrom einer Propylen-Isobutan-Cooxidation oder einen Produktstrom aus einer Metathese-Einheit ein.

Insbesondere bei Verwendung eines Raffinat 1-Stromes als Isobutenquelle hat sich die Verwendung von Wasser als alleinigem oder als weiterem Initiator bewährt, vor allem wenn man bei Temperaturen von -20°C bis +30°C, insbesondere von 0°C bis +20°C, polymerisiert. Bei Temperaturen von -20°C bis +30°C, insbesondere von 0°C bis +20°C, kann man bei Verwendung eines Raffinat 1-Stromes als Isobutenquelle jedoch auch auf den Einsatz eines Initiators verzichten.

Das genannte Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können auch Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden sollen, enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

Als copolymerisierbare Monomere kommen in Betracht: Vinylaromaten wie Styrol und $\alpha$-Methylstyrol, $C_1$- bis $C_4$-Alkylstyrole wie 2-, 3- und 4-Methylstyrol und 4-tert.-Butyl-styrol, Halogenstyrole wie 2-, 3- oder 4-Chlorstyrol sowie Isoolefine mit 5 bis 10 Kohlenstoffatomen wie 2-Methylbuten-1, 2-Methylpenten-1, 2-Methylhexen-1, 2-Ethylpen-ten-1, 2-Ethylhexen-1 und 2-Propylhepten-1. Als Comonomere kommen weiterhin Olefine in Betracht, die eine Silylgruppe aufweisen, wie 1-Trimethoxysilylethen, 1-(Trime-thoxysilyl)propen, 1-(Trimethoxysilyl)-2-methylpropen-2, 1-[Tri(methoxyethoxy)silyl]-ethen, 1-[Tri(methoxyethoxy)silyl]propen, und 1-[Tri(methoxyethoxy)silyl]-2-methylpro-pen-2. Weiterhin kommen - abhängig von den Polymerisationsbedingungen - als Comonomere auch Isopren, 1-Buten und cis- und trans-2-Buten in Betracht. Das Verfahren kann so ausgestaltet werden, dass bevorzugt statistische Polymere oder bevorzugt Blockcoplymere entstehen. Zur Herstellung von Blockcopolymeren kann man beispielsweise die verschiedenen Monomere nacheinander der Polymerisationsreaktion zuführen, wobei die Zugabe des zweiten Comonomers insbesondere erst dann erfolgt, wenn das erste Comonomer zumindest teilweise schon polymerisiert ist. Auf diese Weise sind sowohl Diblock-, Triblockals auch höhere Blockcopolymere zugänglich, die je nach Reihenfolge der Monomerzugabe einen Block des einen oder anderen Comonomers als terminalen Block aufweisen. Blockcopolymere entstehen in einigen Fällen aber auch dann, wenn alle Comonomere zwar gleichzeitig der Polymerisationsreaktion zugeführt werden, eines davon aber signifikant schneller polymerisiert als das oder die anderen. Dies ist insbesondere dann der Fall, wenn Isobuten und eine vinylaromatische Verbindung, insbesondere Styrol, im erfindungsgemäßen Verfahren copolymerisiert werden. Dabei entstehen vorzugsweise Blockcopolymere mit einem terminalen Polystyrolblock. Dies ist darauf zurückzuführen, dass die vinylaromatische Verbindung, speziell Styrol, signifikant langsamer polymerisiert als Isobuten.

Die Polymerisation kann sowohl kontinuierlich als auch diskontinuierlich erfolgen. Kontinuierliche Verfahren können in Analogie zu bekannten Verfahren des Standes der Technik zur kontinuierlichen Polymerisation von Isobuten in Gegenwart von Lewis-Säuren, bevorzugt Bortrifluorid- oder Aluminiumtrichlorid- oder Alkylaluminiumchlorid-basierten Katalysatoren, in flüssiger Phase durchgeführt werden.

Als "reaktive Doppelbindungen" oder "Vinylidenbindungen" werden im Rahmen der vorliegenden Erfindung terminale, sogenannte $\alpha$- und $\beta$-Doppelbindungen (in Summe) verstanden. Diese zeichnen sich durch folgende Strukturelemente (hier dargestellt am Beispiel des iso-Buten Homopolymers) aus:

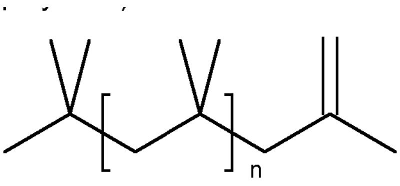

α-Doppelbindung

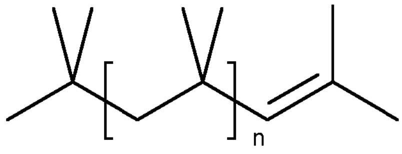

β-Doppelbindung

Der Anteil an reaktiven Doppelbindungen in den erfindungsgemäß einsetzbaren Isobutenhomo- oder -copolymeren, bezogen auf α- und β-Doppelbindungen in Summe, kann von 30 bis 100 mol% betragen, bevorzugt 40 bis 97, besonders bevorzugt 50 bis 95, ganz besonders bevorzugt 55 bis 93 und insbesondere 60 bis 90 mol%.

Die Verteilung von α-: β-Doppelbindungen im Polyisobuten (B1) beträgt in der Regel von 90:10 bis 10:90, bevorzugt von 20:80 bis 80:20, besonders bevorzugt von 30:70 bis 70:30, ganz besonders bevorzugt von 65:35 bis 35:65 und insbesondere von 60:40 bis 40:60.
Der Anteil an α- und β-Doppelbindungen als auch die Verteilung von α-: β-Doppelbindungen hängt von der Herstellung der Polyisobutene (B1) ab.

Der Gehalt an Doppelbindungen wird bestimmt und den jeweiligen Strukturen zugeordnet gemäß der $^1$H-NMR Methode wie beschrieben in An-Ru Guo, Xiao-Jian Yang, Peng-Fei Yan, Yi-Xian Wu, Journal of Polymer Science, Part A: Polymer Chemistry 2013, 51, 4200-4212, dort besonders Seite 4205 und Fig. 5 auf Seite 4206.

Die Vinylidengruppen zeigen die höchste Reaktivität, beispielsweise bei der thermischen Addition an sterisch anspruchsvolle Reaktionspartner wie Maleinsäureanhydrid, wohingegen eine weiter im Inneren der Makromoleküle liegende Doppelbindung in den meisten Fällen keine oder geringere Reaktivität bei Funktionalisierungsreaktionen zeigt.

Häufig reagieren unter den Vinylidengruppen die α-Doppelbindungen schneller und bereitwilliger als die β-Doppelbindungen, so daß im Reaktionsgemisch im Verlauf der Reaktion die Reaktionsprodukte der Umsetzung der α-Doppelbindungen zunächst in höherem Maße gebildet werden als die der β-Doppelbindungen. Dies kann dazu führen, daß zur Umsetzung der β-Doppelbindungen schärfere Reaktionsbedingungen erforderlich sind als zur Umsetzung der α-Doppelbindungen.

Das zahlenmittlere Molekulargewicht $M_n$ der in das erfindungsgemäße Verfahren einsetzbaren Polyisobutene beträgt von 10.000 bis 50.000.

Mit Vorteil können Polyisobutene mit einem Molekulargewicht $M_n$ von mindestens 12.000, besonders bevorzugt von mindestens 15.000, ganz besonders bevorzugt von mindestens 17.000 und insbesondere von mindestens 20.000 g/mol eingesetzt werden.

Das Molekulargewicht $M_n$ der Polyisobutene kann bevorzugt bis zu 48.000, besonders bevorzugt bis zu 45.000, ganz besonders bevorzugt bis zu 40.000 und insbesondere bis zu 35.000 g/mol betragen.

Die Polydispersität $M_w/M_n$ kann von 1,05 bis 10, vorzugsweise von 1,1 bis 8, besonders bevorzugt von 1,2 bis 7, ganz besonders bevorzugt von 1,3 bis 6 und insbesondere bevorzugt von 1,4 bis 5 betragen.

Das gewichtsmittlere Molekulargewicht $M_w$ kann aus diesen Daten für $M_n$ und Polydispersität errechnet werden.

Als Reaktionspartner für das Polyisobuten (B1) dienen gemäß der vorliegenden Erfindung Maleinsäure sowie deren Derivate (B2).

Unter Derivaten werden dabei verstanden

- die betreffenden Anhydride in monomerer oder auch polymerer Form,
- Mono- oder Dialkylester, bevorzugt Mono- oder Di-$C_1$-$C_4$-alkylester, besonders bevorzugt Mono- oder Dimethylester oder die entsprechenden Mono- oder Diethylester, sowie
- gemischte Ester, bevorzugt gemischte Ester mit unterschiedlichen $C_1$-$C_4$-Alkylkomponenten, besonders bevorzugt gemischte Methylethylester.

Bevorzugt handelt es sich bei den Derivaten um Anhydride in monomerer Form oder Di-$C_1$-$C_4$-alkylester, besonders bevorzugt um Anhydride in monomerer Form.

Unter $C_1$-$C_4$-Alkyl wird im Rahmen dieser Schrift Methyl, Ethyl, *iso*-Propyl, n-Propyl, n-Butyl, *iso*-Butyl, *sek*-Butyl und *tert*-Butyl verstanden, bevorzugt Methyl und Ethyl, besonders bevorzugt Methyl.

Beispiele für Dicarbonsäuren (B2) sind Maleinsäure und deren Derivate.

Insbesondere handelt es sich bei dem Reaktionspartner (B2) um Maleinsäureanhydrid.

Das molare Verhältnis von Komponente (B2) zu reaktiver Doppelbindung im Polyisobuten (B1) beträgt erfindungsgemäß mindestens 2 : 1, besonders bevorzugt mindestens 2,5 : 1, ganz besonders bevorzugt mindestens 3 : 1, insbesondere mindestens 3,5 : 1 und speziell mindestens 4 : 1.

In der Regel bringt ein molares Verhältnis von Komponente (B2) zu reaktiver Doppelbindung im Polyisobuten

(B1) von mehr als 30 : 1 keinen Vorteil, bevorzugt beträgt es bis zu 25 : 1, besonders bevorzugt bis zu 20 : 1 und ganz besonders bevorzugt bis zu 18 : 1.

Ein Überschuß an Komponente (B2) kann in der Regel leicht destillativ bzw. per Sublimation abgetrennt werden. Die so wiedergewonnene überschüssige Komponente (B2) kann dann in einer weiteren Reaktion nochmals eingesetzt werden.

Die erfindungsgemäße Reaktion wird bei einer Temperatur von 180 bis 250 °C durchgeführt, bevorzugt 190 bis 240 und besonders bevorzugt von 200 bis 230 °C.

Da Maleinsäureanhydrid als Komponente (B2) bei ca. 202 °C siedet, wird die Reaktion bei Temperaturen oberhalb von 200 °C, bevorzugt oberhalb von 190 °C und besonders bevorzugt bereits bei Temperaturen oberhalb von 180 °C zumindest unter Eigendruck, bevorzugt unter leichtem Überdruck durchgeführt.

Dieser Druck sollte mindestens 100 mbar, bevorzugt mindestens 200 mbar, besonders bevorzugt mindestens 500 mbar und insbesondere mindestens 1 bar betragen.

In der Regel sind bis zu 10 bar Überdruck ausreichend, bevorzugt bis zu 8 bar, besonders bevorzugt bis zu 7 bar und ganz besonders bevorzugt bis zu 5 bar.

Bevorzugt führt man die Reaktion unter einer Inertatmosphäre durch, besonders bevorzugt wird Stickstoff- oder Kohlendioxidatmosphäre verwendet.

Die Dauer der erfindungsgemäßen Reaktion sollte je nach Temperatur mindestens 15 Minuten betragen, bevorzugt mindestens 30, besonders bevorzugt mindestens 45 und ganz besonders bevorzugt mindestens 60 Minuten. Insbesondere sollte die Reaktionsdauer mindestens 2 Stunden betragen.

In der Regel und je nach Temperatur sollte die Reaktion innerhalb von 10 Stunden abgeschlossen sein, bevorzugt innerhalb von 8 und besonders bevorzugt innerhalb von 7 Stunden.

Es stellt eine mögliche Ausführungsform der vorliegenden Erfindung dar, die Reaktion ohne weiteres Lösungsmittel durchzuführen. Dies ist dann bevorzugt, wenn ein hoher Überschuß an Komponente (B2) eingesetzt wird und die Reaktion in der Schmelze der flüssigen oder aufgeschmolzenen Komponente (B2) durchgeführt werden kann.

In einer bevorzugten Ausführungsform wird die Reaktion jedoch in einem Lösungsmittel durchgeführt, das natürlich bevorzugt unter den Reaktionsbedingungen keine wesentliche Reaktion mit dem Polyisobuten und/oder der Komponente (B2) zeigen soll. Bevorzugt handelt es sich bei dem Lösungsmittel um Kohlenwasserstoffe oder Kohlenwasserstoffgemische, Carbonsäureester, Ether oder Ketone, besonders bevorzugt um Kohlenwasserstoffe oder Kohlenwasserstoffgemische.

Als aromatische Kohlenwasserstoffgemische sind solche bevorzugt, die überwiegend aromatische $C_7$- bis $C_{14}$-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend $C_9$ und $C_{10}$-Aromaten, Siedebereich etwa 154 - 178 °C), 150 (Siedebereich etwa 182 - 207 °C) und 200

(CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen oder Cycloalkanen.

In einer bevorzugten Ausführungsform weist das eingestzte Lösungsmittel einen Siedepunkt bei Normaldruck von mindestens 140 °C auf.

Es stellt eine bevorzugte Ausführungsform der vorliegenden Erfindung dar, die Reaktion in einem Reaktor auszuführen, dessen Reaktionsvolumen zu mindestens 50% durch das flüssige Reaktionsgemisch ausgefüllt ist, bevorzugt zu mindestens 60%, besonders bevorzugt zu mindestens 66%, ganz besonders bevorzugt zu mindestens 75%, insbesondere zu mindestens 90% und speziell vollständig.

Dies hat den Vorteil, daß bei der Reaktionstemperatur der Reaktionspartner Maleinsäureanhydrid im flüssigen Reaktionsgemisch verbleibt und nur zu einem geringen Anteil in die Gasphase ausweichen kann, so daß die Verfügbarkeit an Komponente (B2) im Reaktionsgemisch erhöht wird.

In einer weiteren bevorzugten Ausführungsform ist der besagte Reaktor rückvermischungsarm oder rückvermischungsfrei. Diese Fördercharakteristik ist durch eine Bodensteinzahl von mindestens 3, bevorzugt mindestens 5, besonders bevorzugt mindestens 7 gekennzeichnet.

Bevorzugte Ausführungsformen derartiger Apparate sind Schaufeltrockner mit oder bevorzugt ohne Kühlzone, optional mit Zwangsaustragsorganen.

Solche erfindungsgemäß einsetzbaren Schaufeltrockner weisen bevorzugt keine Trennung in Heiz- und Kühlzone auf, um nicht eine sprunghafte Absenkung der Temperatur zu bewirken. Stattdessen steigt die Temperatur des Rückstandes im Verlauf des Durchgangs des Rückstandes durch den Apparat an, bevorzugt um einen Temperaturgradienten, der sich im Verlauf des Durchgangs des Rückstandes durch den Apparat um nicht mehr als 50 °C verändert, und besonders bevorzugt keine wesentliche Temperaturänderung im Verlauf des Durchgangs des Rückstandes durch den Apparat, d.h. weniger als 20 und insbesondere weniger als 10 °C.

Derartige Schaufeltrockner sind im Wesentlichen horizontal aufgebaut, die Förderung des Rückstandes erfolgt in der Regel über ein- oder zwei Misch- und Knetwellen im Inneren des Apparates. In der Fachliteratur werden diese Apparate auch als Partikelbettreaktor, Knettrockner oder Knetreaktor bezeichnet.

Bevorzugt ist, dass der Schaufeltrockner eine Zwangsförderung in axialer Richtung aufweist. Die Zwangsförderung wird beispielsweise durch eine Schrägstellung der
Oberflächen der Förderelemente erreicht.

Der axiale Transport durch den Apparat kann bevorzugt durch Anordnung von Förder-, Knet- und/oder Mischelementen, beispielsweise Scheibenelementen, Wellen, Schnecken, Blättern, Wischern oder Rotoren erfolgen.

Bevorzugt wird zur Einengung der Verweilzeitverteilung im Schaufeltrockner der produktführende Innenraum mit blendenartigen Scheiben in verschiedene Segmente getrennt. Besonders bevorzugt werden mindestens zwei Scheiben eingesetzt.

Die Beheizung erfolgt über die Wand und kann in beliebiger Art und Weise erfolgen. Bevorzugt erfolgt die Beheizung nicht nur über die Aussenwandung des Apparates, sondern auch über die Einbauten wie Reinigungshaken, Segmentierscheiben, und Knetwelle.

Die thermische Energie, die über die Wandungen in den Reaktorinhalt eingetragen wird, beträgt üblicherweise mehr als 120 kJ/kg Reaktorinhalt und weniger als 2400 kJ/kg Reaktorinhalt, bevorzugt mehr als 220 kJ/kg Reaktorinhalt und weniger als 1800 kJ/kg Reaktorinhalt, besonders bevorzugt mehr als 300 kJ/kg Reaktorinhalt und weniger als 1400 kJ/kg Reaktorinhalt und ganz besonders bevorzugt mehr als 360 kJ/kg Rückstand und weniger als 900 kJ/kg Reaktorinhalt.

Die Aufheizstrecke des auf den Schaufeltrockner aufgegebenen Reaktionsgemisches beträgt bevorzugt mehr als 10 % und weniger als 70 % der gesamten Länge des Schaufeltrockners, bevorzugt mehr als 20 % und weniger als 60 %, besonders bevorzugt mehr als 30 % und weniger als 50 % der gesamten Länge des Schaufeltrockners.

Im Apparat ist in der Regel ein mechanischer Energieeintrag von 5 W/kg oder mehr ausreichend, bevorzugt 10 oder mehr W/kg, besonders bevorzugt 20 oder mehr, ganz besonders bevorzugt 40 oder mehr, insbesondere 80 oder mehr und speziell 100 W/kg oder mehr. In der Regel bringt ein Energieeintrag von mehr als 200 W/kg keine Vorteile. Der angegebene spezifische Leistungseintrag ist hier als eingetragene Leistung pro Menge an Reaktionsgemisch im Apparat.

Weiterhin ist vorteilhaft, dass der Schaufeltrockner eine Zwangsreinigung der inneren, produktberührten Oberflächen von mindestens 50 %, bevorzugt mindestens 60 %, ganz besonders bevorzugt von mindestens 70 % und im speziellen mindestens 80 % dieser inneren, produktberührten Oberflächen aufweist. Die Zwangsreinigung wird die Nähe der Förderelemente zur Aussenwandung bzw. durch die Nähe von Reinigungshaken zu den Förderelementen gewährleistet.

Derartige Apparate werden beispielsweise von der Firma List AG, Arisdorf, Schweiz, unter den Handelsnamen Discotherm® B oder List-CRP bzw. AP, sowie von der Firma Buss-SMS-Canzler GmbH, Butzbach, Deutschland unter den Namen Reasol® oder Reactotherm® angeboten.

Optional können Austragsorgane für den Zwangsaustrag des Reaktionsaustrages vorhanden sein, beispielsweise Schnecken, bevorzugt Doppelschnecken.

Zumeist reichen jedoch die mechanischen Fördereinrichtungen des Apparates aus, um das Reaktionsgemisch aus dem Apparat auszutragen.

Optional können dem Reaktionsgemisch Stabilisatoren zur Unterbindung von Nebenreaktionen zugesetzt werden, bevorzugt solche wie beschrieben in EP 156310 A2.

Bei diesen Zusatzstoffen handelt es sich um Alkoxide, bevorzugt die $C_2$- bis $C_4$-Alkoxide, des Titans, Zirkons, Vanadins oder Aluminiums. Derartige Verbindungen sind an sich bekannt und verfügbar. Insbesondere geeignete Alkoxide sind die Verbindungen: Titan(IV)butoxid = $Ti(C_4H_9O)_4$, Titan(IV)i-butoxid = $Ti[(CH_3)_2CHCH_2O]_4$, Titan(IV)ethoxid = $Ti(C_2H_5O)_4$, Titan(IV)i-propoxid = $Ti(OC_3H_7)_4$, Titan(IV)n-propoxid = $Ti(C_3H_7O)4$, Zirkon n-butoxid-Butanolkomplex = $(C_4H_9O)_4Zr{\cdot}C_4H_9OH$, Zirkon-i-propoxid = $Zr(OC_3H_7)$ = $C_3H_7OH$, Zirkon-n-propoxid = $Zr(OC_3H_7)_4$, Vanadin(V)tri-n-butoxid-oxid = $VO(OC_4H_9)_3$, Vanadin(V)triethoxid-oxid = $VO(OC_2H_5)_3$, Vanadin(V)tri-i-propoxidoxid = $VO(OC_3H_7)_3$ , Vanadin(V)tris-n-propoxid-oxid = $VO(OC_3H_7)_3$, Aluminium-i-butoxid = $Al(OC_4H_9)_3$, Aluminium-n-butoxid = $Al(OC_4H_9)_3$, Aluminium-s-butoxid = $Al(OC_4H_9)_3$, Aluminium-t-butoxid = $Al(OC_4H_9)_3$ oder Aluminium-i-propoxid = $Al(OC_3R_7)_3$.
Die erwähnten Alkoxide liegen in flüssigem Zustand, gegebenenfalls als Komplexverbindung mit dem entsprechenden

Alkohol, vor und werden in dieser Form bei der erfindungsgemäßen Reaktion verwendet. Sie werden mit einem Reinheitsgrad von 95 bis 99 Gew.%, bei den Alkoxiden des Aluminiums von 90 bis 99 Gew.%, eingesetzt. Die zu verwendenden Alkoxide sind in der Reaktionsmischung löslich.

Die Stabilisatoren werden in Mengen von 1 bis 5000, bevorzugt 5 bis 1000 Gew.-ppm, besonders bevorzugt 10 bis 500 Gew.ppm, ganz besonders bevorzugt 25 bis 300 Gew.ppm bezogen auf das eingesetzte Olefin eingesetzt.

In einer bevorzugten Ausführungsform werden in dem erfindungsgemäßen Verfahren keine weiteren Stabilisatoren eingesetzt.

Bei der hier exemplarisch gezeigten Umsetzung von Polyisobuten Homopolymer mit Maleinsäureanhydrid können sich, insbesondere bei höheren Molverhältnissen von Maleinsäureanhydrid zu Polyisobuten, als Folgeprodukte Verbindungen bilden, die mehr als eine Bernsteinsäureanhydridgruppe pro Polymer tragen. Diese Produkte haben ausgehend von α- bzw. β-Doppelbindungen unterschiedliche Strukturen:

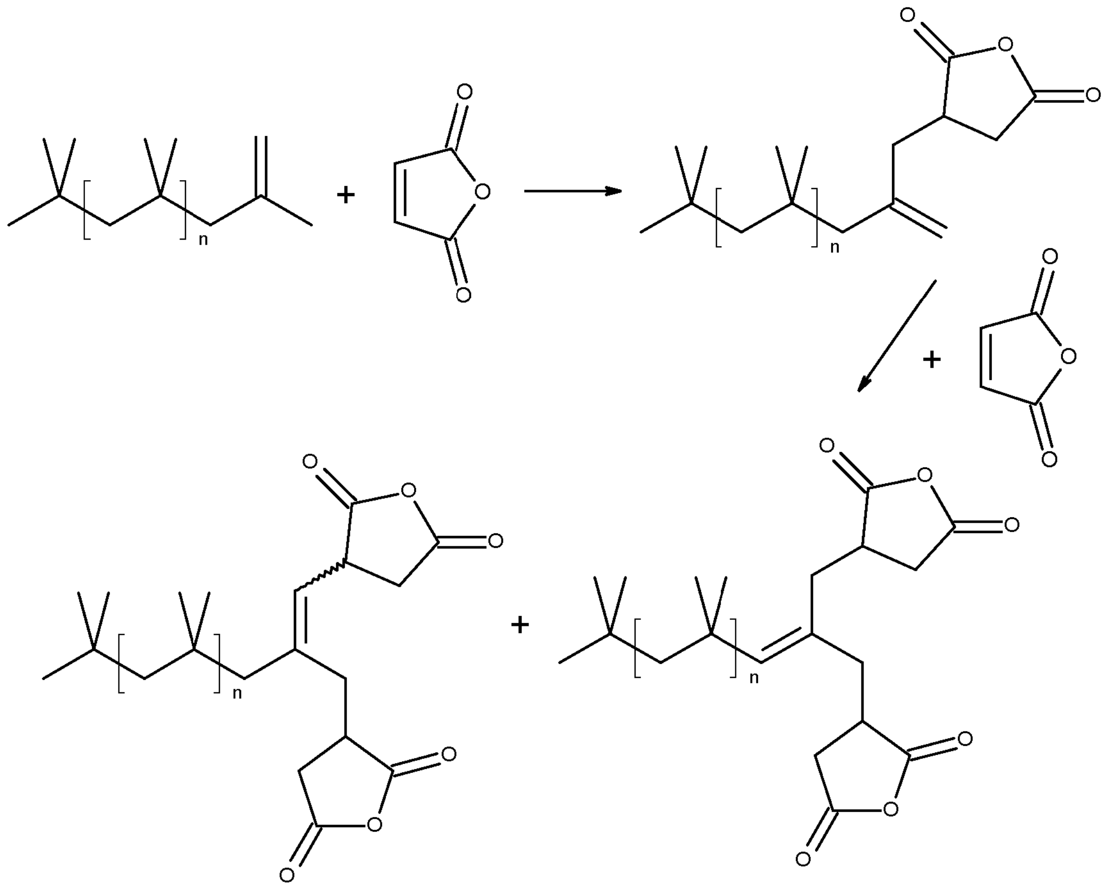

bzw.

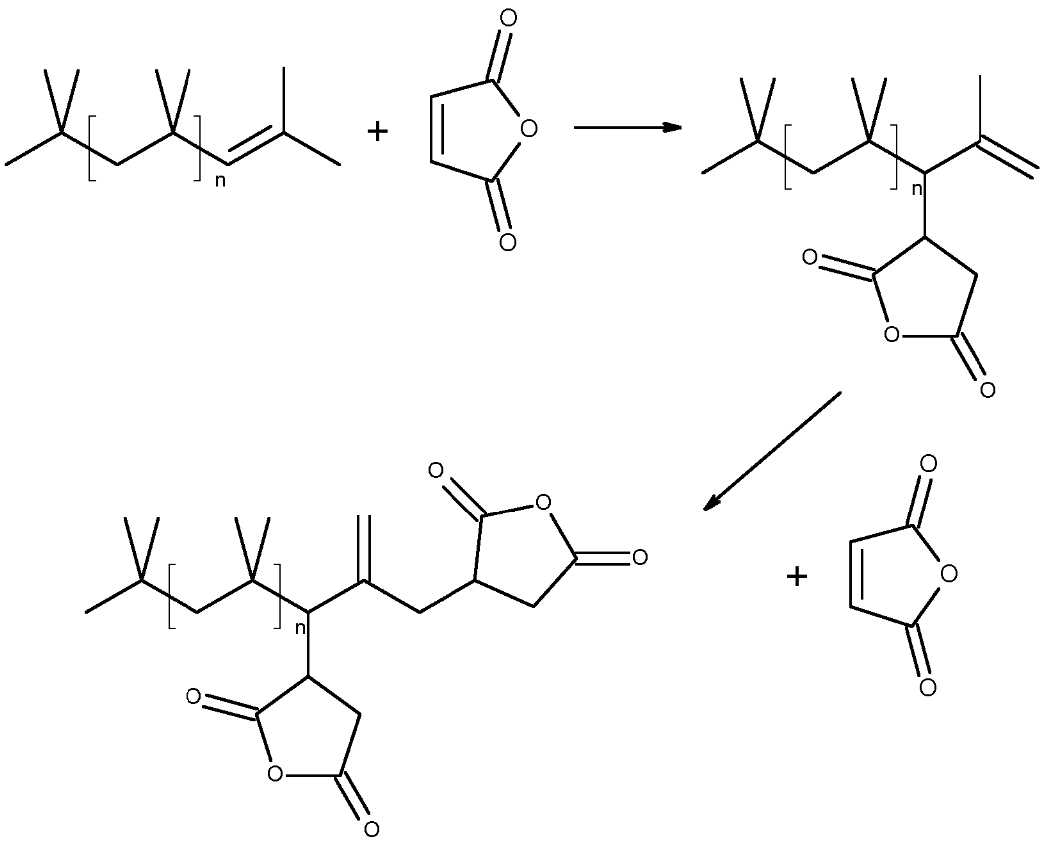

In diesen Reaktionsschemata steht n für eine natürliche Zahl von 176 bis 890, bevorzugt von 214 bis 855, besonders bevorzugt von 265 bis 801, ganz besonders bevorzugt von 301 bis 712 und insbesondere von 355 bis 623.

Gegenstand der vorliegenden Erfindung sind demzufolge auch Reaktionsgemische, erhältlich durch Umsetzung von Polyisobuten-Homopolymer oder iso-Buten enthaltende Copolymere mit Maleinsäureanhydrid, die mindestens eines der in den beiden obigen Reaktionsschemata gezeigten, mindestens eine Bernsteinsäureanhydridgruppe-tragende Produkte enthält.

Das Verhältnis der höher zu den einfach maleinierten Komponenten zueinander kann durch den "Bismaleinierungsgrad" (BMG) angegeben werden. Der BMG ist an sich bekannt (Siehe auch US 5,883,196) und kann nach folgender Formel bestimmt werden:

$$BMG = 100\% \times [(wt\text{-}\%(BM\ PIBSA)/(wt\text{-}\%(BM\ PIBSA)+wt\text{-}\%(PIBSA))]$$

wobei wt-%(X) für den jeweiligen Gewichtsanteil der Komponente X (X = PIBSA (einfach maleiniertes Polyisobuten) oder BM PIBSA (mehr als einfach maleiniertes Polyisobuten)) im Umsetzungsprodukt von Polyisobuten mit Maleinsäureanhydrid steht.

Berechnet wird der Bismaleinierungsgrad bevorzugt aus der Verseifungszahl gemäß DIN 53401: 1988-06 der Probe. Dabei muß die Probe gegebenenfalls mit einem geeigneten Lösungsmittel solubilisiert werden, bevorzugt in einem 2:1 Gemisch aus Toluol und Ethanol.

Dabei ist zu beachten, daß lediglich das Verhältnis der höher maleinierten Komponenten zu den einfach maleinierten Komponenten einbezogen wird, wohingegen im Reaktionsgemisch befindliches unumgesetztes Polyisobuten, beispielsweise solches, das keine reaktiven Doppelbindungen enthält, nicht in die Bestimmung des Bismaleinierungsgrades eingeht. Mithin kann das Reaktionsgemisch auch noch unumgesetztes Polyisobuten enthalten, was meist dem Anteil im eingesetzten Polyisobuten entspricht, der keine reaktiven Doppelbindungen enthält, wohingegen der reaktive Doppelbindungen enthaltende Anteil im Polyisobuten bevorzugt vollständig oder nahezu vollständig abreagiert.

Der Anteil an im Reaktionsgemisch befindlichen, unumgesetztem Polyisobuten entspricht daher in der Regel dem oben angegebenen bis zu 100 fehlenden Anteil an reaktiven Doppelbindungen in den erfindungsgemäß einsetzbaren Isobutenhomo- oder -copolymeren.

Zur Bestimmung des Anteils an maleinierten Komponenten im Verhältnis zum unumgesetzten Polyisobuten wird das Reaktionsgemisch in n-Heptan gelöst und auf eine Säule mit Kieselgel 60 aufgebracht und mit n-Heptan eluiert,

bis kein Produkt mehr im Eluat auftritt. Mit Hilfe einer Säulenchromatographie wird das unumgesetzten Polyisobuten von den maleinierten Komponenten getrennt, da die maleinierten Komponenten nicht eluiert werden. Nach Abtrennung des Lösungsmittels durch Destillation wird durch Abwiegen der Gewichtsanteil an maleinierten Komponenten im Reaktionsgemisch bestimmt.

Die obige Formel kann analog auch auf andere Komponenten (B2) als Maleinsäureanhydrid angewendet werden und wird hier auch für andere Komponenten (B2) als Maleinsäureanhydrid einfachheitshalber ebenfalls als Bismaleinierungsgrad bezeichnet.

Unter den Reaktionsbedingungen des erfindungsgemäßen Verfahren werden Bismaleinierungsgrade bis zu 20 %, bevorzugt bis zu 15% oder weniger, wie z.B. 14, 13, 12, oder 10%; oder 10% oder weniger, wie z.B. 2 bis 9, 3 bis 8, 4 bis 7, 5 oder 6 % erhalten.

Der Bismaleinierungsgrad beträgt jedoch in der Regel zumindest 1%, bevorzugt 2 bis 9, insbesondere 3 bis 8 oder 4 bis 7%.

Als Komponente C) können die erfindungsgemäßen Formmassen bis zu 60, vorzugsweise bis zu 50 Gew.-% weiterer Zusatzstoffe enthalten.

Als faser- oder teilchenförmige Füllstoffe C) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 5 bis 40, vorzugsweise 10 bis 40 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

$$(X\text{-}(CH_2)_n)_k\text{-}Si\text{-}(O\text{-}C_mH_{2m+1})_{4-k}$$

in der die Substituenten folgende Bedeutung haben:

X $NH_2$-, 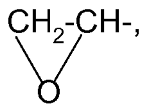, HO-,

n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf C)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit und Hektorit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente C) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen,

vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als sterisch gehinderte Phenole C) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel

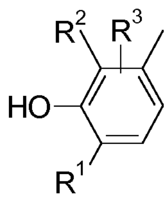

in Betracht, in der bedeuten:

$R^1$ und $R^2$ eine Alkylgruppe, eine substituierte Alkylgruppe oder eine substituierte Triazolgruppe, wobei die Reste $R^1$ und $R^2$ gleich oder verschieden sein können und $R^3$ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US- 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel

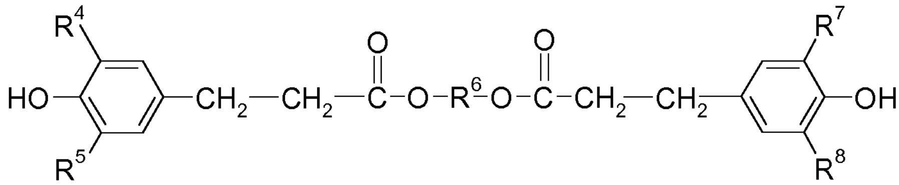

wobei $R^4$, $R^5$, $R^7$ und $R^8$ unabhängig voneinander $C_1$-$C_8$-Alkylgruppen darstellen, die ihrerseits substituiert sein können (mindestens eine davon ist eine sterisch anspruchsvolle Gruppe) und $R^6$ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formel entsprechen, sind

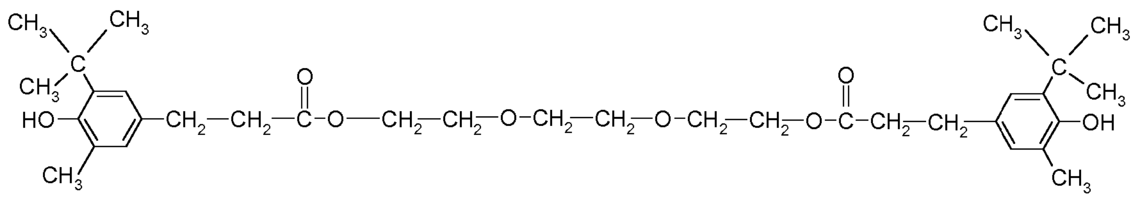

(Irganox® 245 der Firma BASF SE)

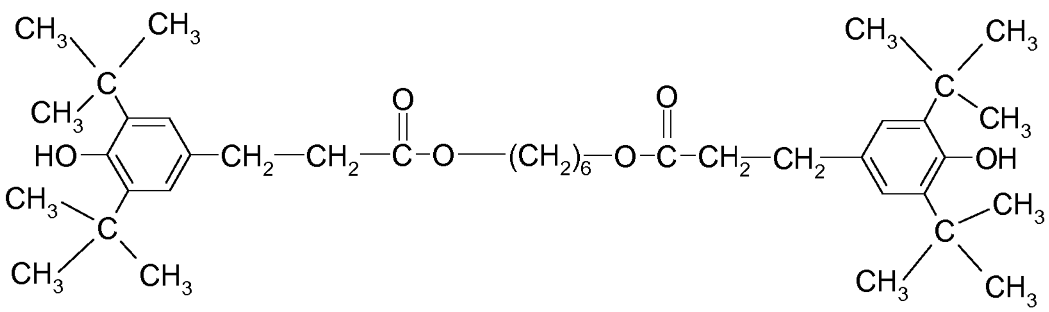

(Irganox® 259 der Firma BASF SE)

Beispielhaft genannt seien insgesamt als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat], Pentaerythrityl-tetrakis-[3-(3,5-di-tert.-butyl-4-hydroxy-phenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenol), 1,6-Hexandiol-bis-(3,5-di-tert.-butyl-4-hydroxyphenyl)-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, das besonders gut geeignet ist.

Die Antioxidantien C), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis C) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente C) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten, sowie als Mikroskopiefarbstoffe Verwendung finden.

Man gewinnt die Nigrosine technisch durch Erhitzen von Nitrobenzol, Anilin und salzsaurem Anilin mit Metall. Eisen und $FeCl_3$ (Name von lateinischem niger = schwarz).

Die Komponente C) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Als Komponente C) können die erfindungsgemäßen Formmassen 0 bis 20, vorzugsweise 1 bis 15 und insbesondere 5 bis 15 Gew.-% roten Phosphor oder/und eines stickstoffhaltigen Flammschutzmittels, vorzugsweise einer Melaminverbindung enthalten.

Geeignete Verbindungen (oft auch als Salze oder Addukte bezeichnet) sind Melaminsulfat, Melamin, Melaminborat, -oxalat, -phosphat prim., -phosphat sec. und -pyrophosphat sec., Neopentylglycolborsäuremelamin sowie polymeres Melaminphosphat (CAS-Nr 56386-64-2 bzw. 218768-84-4).

Als Komponente C) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht

der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschlie-βend extrudiert. Nach der Extrusion kann das Extrudat abgekühlt und zerkleinert werden. Es können auch einzelne Komponenten vorgemischt werden und dann die restlichen Ausgangsstoffe einzeln oder ebenfalls gemischt hinzugegeben werden. Die Mischtemperaturen liegen in der Regel bei 230 bis 320°C.

Nach einer weiteren bevorzugten Arbeitsweise können die Komponenten B) sowie gegebenenfalls C) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäß verwendbaren Formmassen eignen sich zur Herstellung von Formkörpern jeglicher Art, welche eine verbesserte Transparenz und/oder bessere Bildschärfe (clarity) aufweisen.

Die Fließfähigkeit und die mechanischen Eigenschaften, WAB und hygroskopische Eigenschaften sind deutlich verbessert. Sie eignen sich daher insbesondere für Materialien für Deckel, Gehäuse, Anbauteile, Sensoren beispielsweise für Kfz-, Elektronik-, Telekommunikations-, Informationstechnologie-, Computer-, Haushalts-, Sport-, Medizin oder Unterhaltungsanwendungen.

Beispiele

Es wurden folgende Komponenten verwendet:

Komponente A1

Polyamid 6 mit einer Viskositätszahl VZ von 150 ml/g, gemessen als 0,5 gew.-%ige Lösung in 96 gew.-%iger Schwefelsäure bei 25°C nach ISO 307 (Es wurde Ultramid® B27 der BASF SE verwendet).

Komponente A2

Polyamid 66 mit einer Viskositätszahl VZ von 125 ml/g, gemessen als 0,5 gew.-%ige Lösung in 96 gew.-%iger Schwefelsäure bei 25°C nach ISO 307 (Es wurde Ultramid® A24 der BASF SE verwendet).

Komponente B1V

Hochmolekulares Polyisobuten Oppanol® B10 der BASF SE, Ludwigshafen, mit einem Molgewicht Mn von ca. 17.000 und einem Gehalt an Doppelbindungen von 40% α- und 47% β-Doppelbindungen.

Herstellung Komponente B2

Hochmolekulares Polyisobuten Oppanol® B10 der BASF SE, Ludwigshafen, mit einem Molgewicht Mn von ca. 17.000 und einem Gehalt an Doppelbindungen von 40% α- und 47% β-Doppelbindungen und Maleinsäureanhydrid (Molverhältnis Maleinsäureanhydrid : Polyisobuten = 5:1 (bezogen auf die Summe von α- und β-Doppelbindungen)) wurden in einem Druckkessel vorgelegt. Die Reaktionsmischung wurde 7 Stunden unter Stickstoff bei 240 °C gerührt. Anschließend wurde den Kessel auf 200 °C abgekühlt und langsam Xylol hinzugegeben. Die Lösung mit einem Feststoffgehalt von etwa 70% wurde bei 120 °C aus dem Kessel ausgetragen, mit Heptan auf 50 % verdünnt, abfiltriert und bei 205 °C unter Vakuum abdestilliert.

| Maleinsäureanhydrid : Polyisobuten | Ausbeute (%) | Verseifungszahl (mg KOH/g) | Anteil maleinierte Komponenten |
|---|---|---|---|
| 5:1 | 47 | 6 | 47% |

Herstellung Komponente B3

Die vorstehende beschriebene Fahrweise wurde auch für das Polyisobuten Oppanol® B12 der BASF SE, Ludwigshafen, mit einem Molgewicht Mn von ca. 22.000 und einem Gehalt an Doppelbindungen von 40% α- und 40% β-Doppelbindungen angewendet. Das Verhältnis Maleinsäureanhydrid : Polyisobuten betrug 5:1. Der Festoffgehalt in der Xylol Lösung war 60%, die Ausbeute betrug 40%. Der Anteil maleinierten Komponenten betrug 40%.

Herstellung Komponente B4

Das Polyisobuten Oppanol® B15 der BASF SE, Ludwigshafen, mit einem Molgewicht Mn von ca. 37.000 und einem Gehalt an α- und β-Doppelbindungen (in Summe) von 75% wurde in einen Kneter eingefüllt und mit Stickstoff überlagert. Maleinsäureanhydrid wurde zugegeben (Verhältnis Maleinsäureanhydrid : Polyisobuten = 15:1) und die Mischung erst bei Raumtemperatur 5 min geknetet. Der Kneter wurde auf 240 °C aufgeheizt und die Mischung bei 240 °C 60 min geknetet. Anschließend wurde Vakuum unter leichten Stickstoffstrom langsam angelegt und schrittweise erhöht; die Mischung wurde unter Vakuum 15 min gehalten. Anschließend wurde der Kneter auf 190 °C abgekühlt und das Produkt ausgetragen. Die Ausbeute war 35%.

Der Restgehalt an Maleinsäureanhydrid konnte unter diesen Bedingungen auf weniger als 0,005 g/100g Produkt gesenkt werden.

| Temperatur (°C) | Verweilzeit (min) | Maleinsäureanhydrid : Polyisobuten | Umsatz (%) |
|---|---|---|---|
| 240 | 60 | 15:1 | 32 |

Der Anteil an maleinierten Komponenten wurde bestimmt und betrug 25 bis 30%.

Komponente B5V

50:50 Mischung aus Oppanol® B10 und Glissopal ® - SAF der BASF SE (ein niedermolekulares Polyisobuten mit einem Molekulargewicht (Mn) 1000 g/mol, das mit Maleinsäureanhydrid modifiziert wurde.
Verteilungszahl: 85 - 95 mg KOH/g
MSA Gehalt: max. 0,17 Gew.-%

Komponente B6V

Fusabond® MN 493 D der Firma DuPont
Copolymer aus Ethylen-1-Octene-MSA (60:39,5:0,5).

Komponente C1

Ca-Stearat

Komponente C2

Irqanox® 1098 der BASF SE CAS 23128-74-7

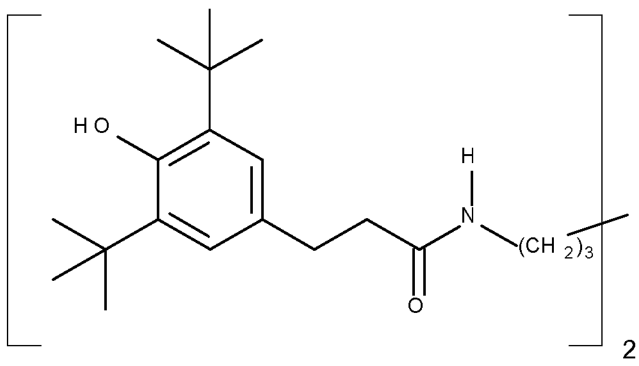

Komponente C3

Irgafos ® 168 der BASF SE CAS 31570-04-4

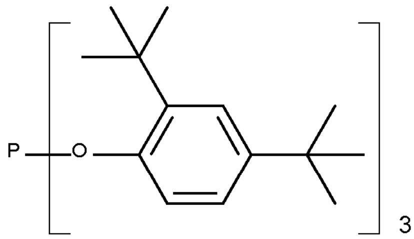

Komponente C4

2090iger Batch KI / CuI (4:1) in Komponente A1

Komponente C5

Glasfasern (Schnittglas)

Herstellung der Formmassen
Kompoundierung auf einer ZSK 18, Durchsatz 6kg/h
Massetemperatur: 280 - 300 °C

Spritzgußbedingungen

Massetemperatur: 260 - 290°C
Werkzeugtemperatur: 60 - 80°C

Messungen:

| | |
|---|---|
| Schlagzähigkeit Charpy gekerbt: | ISO179-2/1 eA(F) |
| Schlagzähigkeit Charpy ungekerbt: | ISO179-1/1eU |
| Zugversuch : | ISO 527-2 |
| MVR : | ISO 1133-1 PA6/PA66 bei 275°C/5 kg |

Wärmealterungsbeständigkeit:

Charpy Stäbe wurden im Umluftofen bei 150°C für verschiedene Zeiten: 96h ; 240h ; 504h ; 984h gelagert. Anschließend wurde die Mechanik anhand folgender Norm bestimmt: ISO179-2/1 eA(F).

Molekulargewichtsbestimmung Komponente B:

Gel Permeations Chromatographie mit THF als Lösungsmittel und Polystyrol als Standard. Die verwendeten

Säulen waren zwei 30cm PLgel Mixed-B Säulen mit einer Porengröße von 10μm und einem Innendurchmesser von 7,5mm verbaut. Der Trennbereich der Säulen beträgt 500-10.000.000 g/mol.

% der funktionalisierten Ketten:

Zur Bestimmung des %Satzes an funktionalisierten Ketten wurde das Polymer in n-Heptan gelöst und auf eine Säule mit Kieselgel 60 aufgebracht. Mit Hilfe der Säulenchromatographie wurden die unfunktionalisierten Ketten von den funktionalisierten Ketten getrennt, da die funktionalisierten Ketten nicht eluiert werden. Durch Abwiegen des Anteils an unfunktionalisierten Ketten konnte der % Teil der funktionalisierten bestimmt werden. Diese Methode wurde durch 1H-NMR Messungen unterstützt basierend auf den Signalen für die unterschiedliche Doppelbindungen (Produkt vs. Ausgangsmaterial).

Clarity+ Haze:

Bestimmung von Gesamttransmission, Haze nach ASTM D 1003 (Trübung) und Clarity (Bildschärfe). Das verwendete Gerät war ein haze gard plus von BYK Gardner.

Kontaktwinkel:

Die Polyamid Proben wurden bei 80°C getrocknet und in Alubeutel verschweißt. Die Messung des Kontaktwinkels erfolgte, direkt nach dem Öffnen des Beutels um Effekte durch aufgenommene Feuchte zu verhindern. Auf die Oberfläche wird ein Tropfen entionisiertes Wasser (milli-Q) aufgebracht und der statische Kontaktwinkel bei 23°C mit Hilfe des Instruments DSA100 von Krüss GmbH bestimmt.

| | |
|---|---|
| Instrument | DSA100, Krüss |
| Messbedingungen | 23°C, statischer Kontaktwinkel |
| Messflüssigkeiten | Entionisiertes Wasser (Milli-Q) |
| Probenvorbereitung | Die PA-Proben wurden unmittelbar nach dem Öffnen aus der verschweißten Verpackung gemessen. |

Tabelle 1: PA6 Compounds und Mechanikmessungen

| Exp Nr. | A1 (%) | A2 (%) | B1V (%) | B2 (%) | B3 (%) | B4 (%) | B5V (%) | B6V (%) | C1 (%) | C2 (%) | C3 (%) | C4 (%) | C5 (%) | Charpy gekerbt, Kerbe A, 23°C/ 50% rel.F. | Charpy gekerbt, Kerbe A, -30°C | Charpy ungekerbt - 50°C | MVR |
|---|---|---|---|---|---|---|---|---|---|---|---|---|---|---|---|---|---|
| 1V | 100 | | | | | | | | | | | | | 6,8 | 7,3 | | 151 |
| 2V | 99 | | | | | | | | | 0.5 | 0.5 | | | 6,5 | 8,6 | | 34 |
| 3V | 90 | | 10 | | | | | | | | | | | 8,7 | 5,3 | Alle brechen 120±60 | 234 |
| 4 | 10 | | | 5 | | | | | | | | | | 13,0 | 10,1 | | 125 |
| 5 | 90 | | | 10 | | | | | | | | | | 15,2 | 12,1 | Nur 1 von 5 bricht | 108 |
| 6 | 89,1 | | | 9,9 | | | | | | 0,5 | 0,5 | | | 15,6 | 11,5 | | 41 |
| 7 | 80 | | | 20 | | | | | | | | | | 17,0 | 13,3 | | 82 |
| 8 | 89 | | | | 9.9 | | | | | 0,5 | 0,5 | | | 17,8 | 12,2 | | 40 |
| 9 | 89 | | | | | 9.9 | | | | 0,5 | 0,5 | | | 18,8 | 11,9 | | 56 |
| 10V | 90 | | | | | | 10 | | | | | | | 12,3 | 8,9 | | |
| 11V | 69 | | | | | | | | | 0,5 | 0,5 | | 30 | 11,6 | 8,4 | | 12 |
| 12 | 59,1 | | | 9.9 | | | | | | 0,5 | 0,5 | | 30 | 17,1 | 9,3 | | 15 |
| 13 | 59,1 | | | | 9.9 | | | | | 0,5 | 0,5 | | 30 | 17,9 | 10,6 | | 12 |
| 14 | 59 | | | | | 10 | | | | 0,5 | 0,5 | | 30 | 17,8 | 10,0 | | 22 |

Tabelle 2: PA66 Compounds und Mechanikwerte

| Exp Nr. | A1 (%) | A2 (%) | B1V (%) | B2 (%) | B3 (%) | B4 (%) | B5 (%) | B6V (%) | C1 (%) | C2 (%) | C3 (%) | C4 (%) | C5 (%) | Charpy gekerbt, Kerbe A, 23°C/ 50% rel.F. | Charpy gekerbt, Kerbe A, -30°C | MVR |
|---|---|---|---|---|---|---|---|---|---|---|---|---|---|---|---|---|
| 1V | | 99 | | | | | | | 0,3 | | | 0,7 | | 5,16 | 5,2 | 192 |
| 2 | | 91 | | 8 | | | | | 0,3 | | | 0,7 | | 11,1 | 8,22 | 147 |
| 3 | | | | | | 8 | | | 0,3 | | | 0,7 | | 12,5 | 8 | 182 |
| 4V | | | | | | | | 8 | 0,3 | | | 0,7 | | 7,7 | 6,23 | 124 |
| 5 | | 61 | | | 8 | | | | 0,3 | | | 0,7 | 30 | 13,7 | 8,14 | 38 |
| 6 | | 61 | | | | 8 | | | 0,3 | | | 0,7 | 30 | 12,2 | 7,7 | 45 |
| 7V | | 61 | | | | | | 8 | 0,3 | | | 0,7 | 30 | 14,7 | 9,32 | 31 |

Tabelle 3

| Wärmealterungsbeständigkeit bei 150°C | | | |
|---|---|---|---|
| Exp Nr. | Lagerzeit bei 150°C [h] | Charpy gekerbt, Kerbe A, 23°C/50% rel.F. | Charpy ungekerbt Kerbe A, -30°C |
| 2 | 0 | 11,1 | 1 aus 5 bricht |
| | 96 | 11,0 | 1 aus 5 bricht |
| | 240 | 8,6 | 0 aus 5 bricht |
| | 504 | 6,7 | 1 aus 5 bricht |
| | 984 | 3,5 | Alle brechen |
| 4V | 0 | 7,7 | Alle brechen |
| | 96 | 5,1 | Alle brechen |
| | 240 | 4,1 | Alle brechen |
| | 504 | 2,7 | Alle brechen |
| | 984 | 1,2 | Alle brechen |

Optische Eigenschaften

Das Polyamidgranulat wurde in einem konischen Doppelschneckenextruder (DSM Xplore, 15cc) unter folgenden Bedingungen aufgeschmolzen:

Verweilzeit: 2 min
Gehäusetemperatur: 260°C
Drehzahl: 80 U/min

Die Spritzgussverarbeitung der geschmolzenen Polymere wurde auf einer DSM-Micro-Injection Moulding Apparatur 10cc durchgeführt. Hierfür wurde der geschmolzene Compound unter Stickstoff direkt in den Zylinder der Spritzugussmaschine gefüllt. Die Schmelze wurde anschlie-βend in eine polierte rechteckige Form mit den Maßen (30mm x 30mm x 1,27 mm) gespritzt. Es wurden folgende Parameter verwendet:

| | |
|---|---|
| Mould: | Plättchen poliert; 30mm x 30mm x 1,27 mm |
| Mouldtemperatur: | 60°C |
| Zylindertemperatur: | 260°C |
| Einspritzdruck: | 8-9 bar |

Tabelle 4:

| Exp. Nr. | Beschreibung | Transmission % | Haze % | Clarity% |
|---|---|---|---|---|
| 1V | 100% A1 | 67 | 101 | 74 |
| 6 | A1 / B2 | 51 | 101 | 62 |
| 8 | A1 / B3 | 55 | 100 | 67 |
| 15V | A1 / B6V (90:10) | 37 | 102 | 12 |

Kontaktwi n kel/Pol arität

Man sieht, dass sich durch das PIBSA1 der Kontaktwinkel zu Wasser erhöht, was einen Hydrophobisierung zeigt. Für Fusabond® MN-493 D wird dies nicht beobachtet.

Tabelle 5

| Exp Nr. | KW H2O [°] |
|---|---|
| 1V | 75,3 ± 2,5 |
| 5 | 95,4 ± 2,6 |
| 15V | 73,6± 3,9 |

**Patentansprüche**

1. Thermoplastischen Formmassen, enthaltend

   A) 20 bis 99,9 Gew.-% eines thermoplastischen Polyamides,
   B) 0,1 bis 40 Gew.-% eines Alkenylbernsteinsäurederivates, erhältlich durch Umsetzung von Polyisobuten (B1) mit einem zahlenmittleren Molekulargewicht Mn von 10.000 bis 50.000 bei Temperaturen von 180 bis 250 °C mit Maleinsäure oder deren Derivate (B2), in einem stöchiometrischen Verhältnis von mindestens 2 Äquivalenten Maleinsäure oder deren Derivate (B2), pro reaktiver Doppelbindung im Polyisobuten (B1) für eine Dauer von mindestens 15 Minuten bis 10 Stunden und bis zu 10 bar Überdruck, wobei die Derivate ausgewählt sind aus der Gruppe bestehend aus Anhydriden, Mono- oder Dialkylestern und gemischten Estern, und wobei es sich bei den reaktiven Doppelbindungen um die Summe der terminalen α- und β-Doppelbindungen im Polyisobuten (B1) handelt,
   C) 0 bis 60 Gew.-% weiterer Zusatzstoffe,

   wobei die Summe der Gewichtsprozente der Komponenten A) bis C) 100 % ergibt.

2. Thermoplastischen Formmassen nach Anspruch 1, wobei die Formmassen aus

   A) 30 bis 99,5 Gew.-%
   B) 0,5 bis 25 Gew.-%
   C) 0 bis 50 Gew.-%

   aufgebaut sind.

3. Thermoplastischen Formmassen nach den Ansprüchen 1 oder 2, in denen die Komponente B) einen Bismaleinierungsgrad von 1 bis 20% bestimmt per Verseifungszahl gemäß DIN 53401: 1988-06 aufweist.

4. Thermoplastischen Formmassen nach den Ansprüchen 1 bis 3, in denen das Polyisobuten (B1) ein Isobuten-Homopolymer ist.

5. Thermoplastischen Formmassen nach den Ansprüchen 1 bis 4, in denen es sich bei dem Polyisobuten (B1) um ein Copolymer handelt, erhältlich durch Polymerisation von Isobuten-haltigen $C_4$-Kohlenwasserstoffströmen.

6. Thermoplastischen Formmassen nach den Ansprüchen 1 bis 5, in denen der Anteil an terminalen α- und β-Doppelbindungen im Polyisobuten (B1) 30 bis 100 mol% beträgt.

7. Thermoplastischen Formmassen nach den Ansprüchen 1 bis 6, in denen es sich bei der Komponente (B2) um Maleinsäureanhydrid oder um Maleinsäure di-$C_1$-$C_4$-alkylester handelt.

8. Thermoplastischen Formmassen nach den Ansprüchen 1 bis 7, in denen es sich bei der Komponente (B2) um Maleinsäureanhydrid handelt.

9. Thermoplastischen Formmassen nach den Ansprüchen 1 bis 8, wobei das molare Verhältnis von Komponente (B2) zu reaktiver Doppelbindung im Polyisobuten (B1) von 3 : 1 bis 30 : 1 bei der Umsetzung beträgt.

10. Verwendung von thermoplastischen Formmassen gemäß den Ansprüchen 1 bis 9, zur Herstellung von Formkörpern jeglicher Art.

**11.** Formkörper erhältlich aus den thermoplastischen Formmassen gemäß den Ansprüchen 1 bis 9.

## Claims

**1.** A thermoplastic molding composition comprising

A) 20 to 99.9 wt% of a thermoplastic polyamide,
B) 0.1 to 40 wt% of an alkenylsuccinic acid derivative obtainable by reaction of polyisobutene (B1) having a number-average molecular weight Mn of 10 000 to 50 000 at temperatures of 180°C to 250°C with maleic acid or derivatives thereof (B2) in a stoichiometric ratio of at least 2 equivalents of maleic acid or derivatives thereof (B2) per reactive double bond in the polyisobutene (B1) for a duration of at least 15 minutes to 10 hours and up to 10 bar of positive pressure, wherein the derivatives are selected from the group consisting of anhydrides, mono- or dialkyl esters and mixed esters and wherein the reactive double bonds are the sum total of the terminal $\alpha$- and $\beta$-double bonds in the polyisobutene (B1),
C) 0 to 60 wt% of further additives,

wherein the weight percentages for the components A) to C) sum to 100%.

**2.** The thermoplastic molding composition according to claim 1, wherein the molding composition is constructed from

A) 30 to 99.5 wt%
B) 0.5 to 25 wt%
C) 0 to 50 wt%.

**3.** The thermoplastic molding composition according to claim 1 or 2 in which the component B) has a bismaleation level of 1% to 20% determined via the saponification number according to DIN 53401: 1988-06.

**4.** The thermoplastic molding composition according to claims 1 to 3, in which the polyisobutene (B1) is an isobutene homopolymer.

**5.** The thermoplastic molding composition according to claims 1 to 4, in which the polyisobutene (B1) is a copolymer obtainable by polymerization of isobutene-containing $C_4$-hydrocarbon streams.

**6.** The thermoplastic molding composition according to claims 1 to 5, in which the the proportion of terminal $\alpha$- and $\beta$-double bonds in the polyisobutene (B1) is 30 to 100 mol%.

**7.** The thermoplastic molding composition according to claims 1 to 6 in which the component (B2) is maleic anhydride or di-$C_1$-$C_4$-alkyl maleate.

**8.** The thermoplastic molding composition according to claims 1 to 7 in which the component (B2) is maleic anhydride.

**9.** The thermoplastic molding composition according to claims 1 to 8, wherein the molar ratio of component (B2) to reactive double bond in the polyisobutene (B1) is from 3: 1 to 30: 1 in the reaction.

**10.** The use of thermoplastic molding compositions according to claims 1 to 9 for producing molded articles of any type.

**11.** A molded article obtainable from the thermoplastic molding compositions according to claims 1 to 9.

## Revendications

**1.** Masses à mouler thermoplastiques, contenant

A) 20 à 99,9 % en poids d'un polyamide thermoplastique,
B) 0,1 à 40 % en poids d'un dérivé d'acide alcénylsuccinique, qui peut être obtenu par transformation d'un polyisobutène (B1) doté d'un poids moléculaire moyen en nombre Mn de 10 000 à 50 000 à des températures de 180 à 250 °C avec de l'acide maléique ou ses dérivés (B2), en un rapport stœchiométrique d'au moins 2

équivalents d'acide maléique ou de ses dérivés (B2), par double liaison réactive dans le polyisobutène (B1) pendant une durée d'au moins 15 minutes jusqu'à 10 heures et jusqu'à 10 bars de surpression, les dérivés étant choisis dans le groupe constitué par des anhydrides, des esters de monoalkyle et des esters de dialkyle et des esters mixtes, et les doubles liaisons réactives étant la somme des doubles liaisons $\alpha$ et $\beta$ terminales dans le polyisobutène (B1),
C) 0 à 60 % en poids d'additifs supplémentaires,

la somme des pourcentages en poids des composants A) à C) donnant 100 %.

**2.** Masses à mouler thermoplastiques selon la revendication 1, les masses à mouler étant construites à partir de

A) 30 à 99,5 % en poids
B) 0,5 à 25 % en poids
C) 0 à 50 % en poids.

**3.** Masses à mouler thermoplastiques selon la revendication 1 ou 2, dans lesquelles le composant B) présente un degré de bismaléinisation de 1 à 20 % déterminé par l'indice de saponification selon la norme DIN 53401 : 1988-06.

**4.** Masses à mouler thermoplastiques selon les revendications 1 à 3, dans lesquelles le polyisobutène (B1) est un homopolymère d'isobutène.

**5.** Masses à mouler thermoplastiques selon les revendications 1 à 4, dans lesquelles le polyisobutène (B1) est un copolymère qui peut être obtenu par polymérisation de flux d'hydrocarbures en $C_4$ contenant de l'isobutène.

**6.** Masses à mouler thermoplastiques selon les revendications 1 à 5, dans lesquelles la proportion de doubles liaisons $\alpha$ et $\beta$ terminales dans le polyisobutène (B1) est de 30 à 100 % en moles.

**7.** Masses à mouler thermoplastiques selon les revendications 1 à 6, dans lesquelles le composant (B2) est l'anhydride de l'acide maléique ou un diester de $C_{1-4}$-alkyle de l'acide maléique.

**8.** Masses à mouler thermoplastiques selon les revendications 1 à 7, dans lesquelles le composant (B2) est l'anhydride de l'acide maléique.

**9.** Masses à mouler thermoplastiques selon les revendications 1 à 8, le rapport molaire du composant (B2) sur la double liaison réactive dans le polyisobutène (B1) est de 3 : 1 à 30 : 1 lors de la transformation.

**10.** Utilisation de masses à mouler thermoplastiques selon les revendications 1 à 9, pour la préparation de corps moulés de toutes sortes.

**11.** Corps moulé pouvant être obtenu à partir des masses à mouler thermoplastiques selon les revendications 1 à 9.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 02062895 A1
- DE 2702604 A
- WO 12072643 A
- WO 9412575 A
- US 2016032091 A
- EP 0031236 A
- US 2071250 A
- US 2071251 A
- US 2130523 A
- US 2130948 A
- US 2241322 A
- US 2312966 A
- US 2512606 A
- US 3393210 A
- DE 10313681 A
- EP 1198491 A
- EP 922065 A
- EP 38094 A
- EP 38582 A
- EP 39524 A
- EP 299444 A
- EP 1994075 A
- EP 129195 A
- US 129196 A
- EP 156310 A2
- US 5883196 A
- DE 2702661 A
- US 4360617 A

### In der Beschreibung aufgeführte Nicht-Patentliteratur

- **M. C. M. VAN DER SANDEN ; J. G. M. VAN GISBERGEN ; I. D. TAUBER ; H. E. H. MEIJER ; P. J. LEMSTRA.** *Integration of Fundamental Polymer Science and Technology,* vol. 5, 66-71
- **AN-RU GUO ; XIAO-JIAN YANG ; PENG-FEI YAN ; YI-XIAN WU.** Journal of Polymer Science, Part A: Polymer Chemistry. 2013, vol. 51, 4200-4212
- Lexikon Römpp. Thieme-Verlag Stuttgart, 2006, vol. Nigrosin
- *CHEMICAL ABSTRACTS,* 23128-74-7
- *CHEMICAL ABSTRACTS,* 31570-04-4